# EUROPÄISCHE PATENTANMELDUNG

(11) **EP 4 703 821 A1**
(43) Veröffentlichungstag der Anmeldung: **04.03.2026**
(21) Anmeldenummer: 24197296.7
(22) Anmeldetag: 29.08.2024
(51) Int. Cl.: G05B 19/4093

(54) **VERFAHREN ZUR HERSTELLUNG EINHEITLICHER WERKSTÜCKE**

(71) Anmelder: Siemens Aktiengesellschaft, 80333 München (DE)
(72) Erfinder: Alkafafi, Loay, 91052 Erlangen (DE); Andreo, Gaelle, 91056 Erlangen (DE); Bock, Marco, 91056 Erlangen (DE); Liebst, Moritz, 75428 Illingen (DE); Pitz, Thomas, 71277 Rutesheim (DE); Rack, Philip Joachim, 70197 Stuttgart, S-West (DE); Schermann, Aleksandra, 71229 Leinfelden-Echterdingen (DE); Schmiegelt, Benjamin, 70825 Korntal-Münchingen (DE); Spielmann, Ralf, 70569 Stuttgart (DE)
(74) Vertreter: Siemens Patent Attorneys

(57) **Zusammenfassung**

Die Erfindung betrifft ein Verfahren zur Bearbeitung wenigstens eines ersten Werkstücks (5A) mittels eines ersten Werkzeugs (3A) mit einem ersten Werkzeug-Wirkradius (RA) und eines zweiten Werkstücks (5B) mittels eines zweiten Werkzeugs (3B) mit einem zweiten Werkzeug-Wirkradius (RB), wobei eine Sollkontur (S) für die Werkstücke (5A, 5B) vorgegeben ist, wobei eine erste Werkzeugbahn (TA) für das erste Werkzeug (3A) in Abhängigkeit des ersten Werkzeug-Wirkradius (RA) ermittelt wird, wobei aufgrund einer Krümmung oder einer Kante in der Sollkontur (S) die Sollkontur (S) mit dem ersten Werkzeug (3A) aufgrund des ersten Werkzeug-Wirkradius (RA) nicht fehlerfrei erzeugbar ist, sondern nur in Form einer ersten Istkontur (IA), die im Bereich der Krümmung oder der Kante eine erste Abweichkontur (AA) gegenüber der Sollkontur (S) umfasst.

Ziel der Erfindung ist es, mit unterschiedlichen Werkzeugen, die sich hinsichtlich ihres Werkzeug-Wirkradius unterscheiden, weitgehend identische Werkstücke zu erzeugen.

Hierzu sieht die Erfindung vor, dass eine neue Sollkontur (NS) erzeugt wird, die die Abweichkontur (AA) umfasst, wobei eine neue zweite Werkzeugbahn (TB') für das zweite Werkzeug (3B) in Abhängigkeit des zweiten Werkzeug-Wirkradius (RB) zum Erzeugen der neuen Sollkontur (NS) ermittelt wird, wobei das zweite Werkstück (3B) gemäß der neuen zweiten Werkzeugbahn (TB') bearbeitet wird.

## Beschreibung

Die Erfindung betrifft ein Verfahren zur Bearbeitung wenigstens eines ersten Werkstücks mittels eines ersten Werkzeugs mit einem ersten Werkzeug-Wirkradius und eines zweiten Werkstücks mittels eines zweiten Werkzeugs mit einem zweiten Werkzeug-Wirkradius,
wobei eine Sollkontur für die Werkstücke vorgegeben ist,
wobei eine erste Werkzeugbahn für das erste Werkzeug in Abhängigkeit des ersten Werkzeug-Wirkradius ermittelt wird,
wobei aufgrund einer Krümmung oder einer Kante in der Sollkontur die Sollkontur mit dem ersten Werkzeug aufgrund des ersten Werkzeug-Wirkradius nicht fehlerfrei erzeugbar ist, sondern nur in Form einer ersten Istkontur, die im Bereich der Krümmung oder der Kante eine erste Abweichkontur gegenüber der Sollkontur umfasst,
wobei eine neue Sollkontur erzeugt wird, die die Abweichkontur umfasst.

Ferner betrifft die Erfindung eine Steuereinrichtung zur Durchführung eines derartigen Verfahrens.

Weiterhin betrifft die Erfindung ein Werkzeugmaschinensystem, umfassend wenigstens eine Steuereinrichtung und eine Werkzeugmaschine.

Bei der Bearbeitung von Werkstücken mittels Werkzeugmaschinen stellt sich das Problem, dass durch die nicht beliebig kleine Dimension des verwendeten Werkzeuges bestimmte Konturen des Werkstücks nicht exakt herstellbar sind, insbesondere Kanten oder besonders starke Krümmungen bei der Werkstückbearbeitung mittels eines Fräsers mit einem bestimmten Werkzeugradius.

Bei derartigen Bearbeitungen kommt es zwangsweise zu Abweichungen zwischen einer gewünschten Sollkontur und einer realisierbaren Istkontur. Beispielsweise kann eine spitze Kante bzw. Ecke nur in Form einer Rundung gefräst werden, deren Krümmungsradius gleich oder größer dem Werkzeugradius ist.

Bei der Verwendung unterschiedlicher Werkzeuge, z.B. eines neuen Werkzeuges und eines gebrauchten, bereits abgenutzten Werkzeuges mit denselben Normmaßen, ist es bei bekannten Steuereinrichtungen, insbesondere CNC-Steuerungen, üblich, den tatsächlichen Werkzeugradius zu berücksichtigen und Werkzeugbahnen zur Bearbeitung des Werkstücks in Abhängigkeit des aktuellen Werkzeugradius zu bestimmen. Diese Werkzeugradiuskorrektur seitens der Steuereinrichtung hat zur Folge, dass sich Werkstücke, die mit unterschiedlichen Werkzeugen bearbeitet wurden, insbesondere im Bereich von Kanten oder stark gekrümmten Oberflächenbereichen unterscheiden. Dabei sind häufig nicht Abweichungen zwischen der Sollkontur und der Istkontur als solche ein Problem, sondern die Abweichungen zwischen den gefertigten Werkstücken.

Aufgabe der Erfindung ist es, zumindest weitgehend identische Werkstücke trotz Verwendung unterschiedlicher Werkzeuge zu erzeugen.

Diese Aufgabe wird gemäß der Erfindung gelöst durch ein Verfahren mit den Merkmalen gemäße Patentanspruch 1, also ein Verfahren zur Bearbeitung wenigstens eines ersten Werkstücks mittels eines ersten Werkzeugs mit einem ersten Werkzeug-Wirkradius und eines zweiten Werkstücks mittels eines zweiten Werkzeugs mit einem zweiten Werkzeug-Wirkradius,
wobei eine Sollkontur für die Werkstücke vorgegeben ist,
wobei eine erste Werkzeugbahn für das erste Werkzeug in Abhängigkeit des ersten Werkzeug-Wirkradius ermittelt wird,
wobei aufgrund einer Krümmung oder einer Kante in der Sollkontur die Sollkontur mit dem ersten Werkzeug aufgrund des ersten Werkzeug-Wirkradius nicht fehlerfrei erzeugbar ist, sondern nur in Form einer ersten Istkontur, die im Bereich der Krümmung oder der Kante eine erste Abweichkontur gegenüber der Sollkontur umfasst,
wobei eine neue Sollkontur erzeugt wird, die die Abweichkontur umfasst,
wobei eine neue zweite Werkzeugbahn für das zweite Werkzeug in Abhängigkeit des zweiten Werkzeug-Wirkradius zum Erzeugen der neuen Sollkontur ermittelt wird,
wobei das zweite Werkstück gemäß der neuen zweiten Werkzeugbahn bearbeitet wird.

Ferner wird die Aufgabe gelöst durch eine Steuereinrichtung nach Anspruch 7, also eine Steuereinrichtung für eine Werkzeugmaschine zur Bearbeitung wenigstens eines ersten Werkstücks mittels eines ersten Werkzeugs mit einem ersten Werkzeug-Wirkradius und eines zweiten Werkstücks mittels eines zweiten Werkzeugs mit einem zweiten Werkzeug-Wirkradius, insbesondere zur Durchführung eines Verfahrens nach einem der Ansprüche 1 bis 7,
wobei eine Sollkontur für die Werkstücke vorgebbar ist,
wobei mittels der Steuereinrichtung und einer davon umfassten Korrektureinrichtung eine erste Werkzeugbahn für das erste Werkzeug in Abhängigkeit des ersten Werkzeug-Wirkradius ermittelbar ist,
wobei aufgrund einer Krümmung oder einer Kante in der ersten Sollkontur die erste Sollkontur mit dem ersten Werkzeug aufgrund des ersten Werkzeug-Wirkradius nicht fehlerfrei erzeugbar ist, sondern nur in Form einer ersten Istkontur, die im Bereich der Krümmung oder der Kante eine erste Abweichkontur gegenüber der ersten Sollkontur umfasst,
wobei eine neue Sollkontur erzeugbar ist, die die Abweichkontur umfasst,
wobei eine neue zweite Werkzeugbahn für das zweites Werkzeug in Abhängigkeit des zweiten Werkzeug-Wirkradius zum Erzeugen der neuen Sollkontur ermittelbar ist,
wobei das zweite Werkstück gemäß der neuen zweiten Werkzeugbahn bearbeitbar ist.

Weiterhin wird die Aufgabe gelöst durch ein Werkzeugmaschinensystem nach Anspruch 13 sowie einen digitalen Zwilling eines Werkzeugmaschinensystems nach Anspruch 15.

Vorteilhafte Ausgestaltungen der Erfindung sind durch die abhängigen Patentansprüche gekennzeichnet.

Die Erfindung kann allgemein bei einer Vielzahl unterschiedlicher Werkzeugmaschinen bzw. unterschiedlicher Werkzeugmaschinen-Typen angewendet werden. Besonders vorteilhaft lässt sich die Erfindung bei CNC-gesteuerten Fräsmaschinen anwenden.

Im Bereich der Werkzeugmaschinen werden einige Maschinen als Mehrspindel-Werkzeugmaschinen, auch als Mehrspindler bezeichnet, ausgeführt. Diese weisen zwei oder mehr Werkzeugspindeln zur entsprechenden Bearbeitung von zwei oder mehr Werkstücken auf. Dadurch müssen zwei oder mehr Bearbeitungen und damit die Bewegungsführung und Spindelsteuerung zeitgleich, also synchron zueinander, erfolgen. Die Anwendung von mehreren synchronen Bearbeitungseinheiten auf einer Maschine lässt sich auf verschiedenste Technologien anwenden, zum Beispiel zum Fräsen, Drehen, Schleifen, und so weiter. Mehrspindel-Werkzeugmaschinen mit genau zwei Werkzeugspindeln werden auch als Doppelspindel-Werkzeugmaschinen oder Doppelspindler bezeichnet.

Doppelspindler können zum Beispiel zwei Werkstücke gleichzeitig mit zwei Werkzeugen bearbeitet, so dass am Ende der Bearbeitung zwei nominell identische Werkstücke vorliegen. Die Bearbeitung der beiden Werkstücke erfolgt synchron. Damit ist die Ausbringung auf einem Doppelspindler im Vergleich zu einer einspindligen Werkezugmaschine doppelt so hoch. Ein Doppelspindler kann jedoch auch betrieben werden, nur ein Werkstück zu fertigen, die zweite Spindel ist dann nicht aktiv.

Bei Doppelspindlern gibt es verschiedene Konzepte, deren Komplexität beispielsweise auf die jeweiligen Produktions- und Genauigkeitsanforderungen zugeschnitten werden kann. Die Konzepte unterscheiden sich konstruktiv beispielsweise in den Freiheitsgraden der einzelnen Werkzeugspindeln beziehungsweise Bearbeitungseinheiten.

In einfachen Doppelspindlern werden die beiden Werkzeugspindeln mechanisch starr miteinander verbunden. Der Spindelverbund wird dann durch die gemeinsamen Achsen, zum Beispiel X-, Y- und Z-Achse, bewegt. Dieses einfache Konzept kann daher konstruktiv begründet nur einen Werkzeugverschleiß berücksichtigen. Es müssen idealerweise identische Werkzeuge bzw. Werkzeuge mit identischem Verschleiß verwendet werden, um bei der Fertigung identische Werkstücke zu erzeugen.

Ein komplexeres Konzept sieht für die beiden Werkzeugspindeln jeweils eigenständige Z-Achsen vor. Dadurch können die Werkzeugspindeln in der Z-Richtung unterschiedlich positioniert werden. Ein noch etwas komplexeres Konzept ermöglicht es durch die Verwendung von Ausgleichsachsen, die redundant auf den Hauptachsen aufgebaut sind, die Werkzeugspindeln und damit die Werkzeuge in alle drei Achsrichtungen zu bewegen, jedoch nur für vergleichsweise kurze Verfahrbereiche. Diese Art der Doppelspindler ist zumindest in der Lage, im Vergleich zu vorherigen beschriebenen Konzepten, mit vollständig unterschiedlichen Werkzeugkorrekturen und ggf. auch Werkstückspannsituationen zurecht zu kommen.

Eine besonders hohe Genauigkeit kann durch sogenannte echte Mehrspindel-Werkzeugmaschinen erreicht werden, also Mehrspindel-Werkzeugmaschinen mit zwei oder mehr eigenständigen, also unabhängig voneinander steuerbaren und damit bewegbaren Werkzeugspindeln. Die beiden Werkzeugspindeln eines Doppelspindlers sind dann beispielsweise jeweils mit einer eigenen X-, Y- und Z-Achse ausgestattet. Je nach Ausführungsform und Technologie können stattdessen oder zusätzliche weitere lineare Achsen und/oder Rotationsachsen (auch als Rundachsen bezeichnet) bei der betreffenden Mehrspindel-Werkzeugmaschine vorgesehen sein. Diese können jeweils für alle Werkzeugspindeln unabhängig sein oder bezüglich den Werkzeugspindeln die gleiche (Relativ-) Bewegung bewirken.

Die Werkzeugspindeln werden dann beispielsweise über ein und dieselbe CNC-Steuerung bedient und gesteuert, zum Beispiel über jeweils einen eigenen Bearbeitungskanal, nachfolgend auch kurz als "Kanal" bezeichnet, für jede Werkzeugspindel. Die einzelnen Achsen der Werkzeugspindeln können teilweise dieselbe Führungsschiene nutzen.

Ein Vorteil echter Mehrspindel-Werkzeugmaschinen besteht darin, dass die verschiedenen Werkzeugspindeln zur Fertigung nominell identischer Werkstücke mit Werkzeugen bestückt werden können, die zwar nominell ebenfalls identisch sind, deren Abmessungen sich aber beispielsweise aufgrund unterschiedlichem Verschleiß voneinander unterscheiden. Die unabhängige Steuerung der verschiedenen Werkzeugspindeln kann die unterschiedlichen Abmessungen kompensieren.

Für eine optimale Ausnutzung des gemeinsamen Arbeitsraumes beziehungsweise eine kompakte Konstruktion der Werkzeugmaschine ist es erstrebenswert, einen mechanischen Versatz zwischen den beiden Werkzeugspindeln möglichst klein auszulegen, beispielsweise kleiner als 1 m oder auch im Bereich von 500 mm liegen. Um derart kleine Abstände mechanisch realisieren zu können, müssten die beweglichen Ständer, an denen die Werkzeugspindeln montiert sind, oder sonstige bewegliche Komponenten, jedoch nur einen sehr geringen Abstand zueinander haben, beispielsweise wenige Millimeter. Es bestünde daher potenzielle Kollisionsgefahr. Diese bestünde vor allem, wenn die Werkzeugspindeln, wie oben erläutert, zur Kompensation unterschiedlicher Werkzeugabmessungen unterschiedlich angesteuert würden.

Die Erfindung sieht vor, dass mittels der gewünschten Sollkontur in Verbindung mit einem bestimmten Werkzeug-Wirkradius, insbesondere dem (Norm-) Werkzeug-Wirkradius eines Normwerkzeuges, eine neue Sollkontur unter Berücksichtigung des Werkzeug-Wirkradius bestimmt wird. Bei der neuen Sollkontur sind demnach Kanten, Ecken oder stark gekrümmte Oberflächenbereiche dahingehend verändert, dass diese nur Krümmungen umfassen, deren Krümmungsradius gleich oder größer dem Werkzeug-Wirkradius ist. Die neue Sollkontur kann daher mit Werkzeugen, deren Werkzeug-Wirkradius kleiner dem Werkzeug-Wirkradius des Normwerkzeuges ist, stets fehlerfrei - soll heißen: ohne durch den Werkzeug-Wirkradius hervorgerufene bzw. bedingte Fehler - erzeugt werden.

Bei allen Werkstücken wird daher stets dieselbe neue Sollkontur erzeugt, unabhängig von dem jeweils verwendeten Werkzeug, solange der Werkzeug-Wirkradius des verwendeten Werkzeugs den Werkzeug-Wirkradius des Normwerkzeuges nicht übersteigt. Dies führt zu einheitlichen, zumindest weitgehend identischen Werkstücken.

Die Erfindung ist besonders vorteilhaft bei Mehrspindler-Werkzeugmaschinen anwendbar, da sie zur Synchronisation der einzelnen Maschineneinheiten beiträgt, jedoch nicht auf diese beschränkt.

Die Erfindung ist weiterhin nicht auf die Verwendung von Fräswerkzeugen beschränkt. Beispielsweise haben Drehmeißel zur Drehbearbeitung eines Werkstücks einen Werkzeugradius an der Spitze des Meißels. Dadurch können Kanten nicht beliebig genau gedreht werden. Vielmehr werden diese stets eine Rundung aufweisen, deren Radius nicht kleiner als der Radius des Drehmeißels an der Werkzeugspitze sein kann. Erfindungsgemäß können auch hier technisch nicht realisierbare Ecken in Form von Rundungen vorgegeben werden.

Die Erfindung sieht vor, ausgehend von der Sollkontur im Bereich der Kante bzw. starken Krümmung eine Abweichkontur zu bestimmen, die sich insbesondere durch eine Krümmung auszeichnet, deren Krümmungsradius den Krümmungsradius des ersten Werkzeuges, insbesondere den (Norm-) Werkzeug-Wirkradius eines als Referenzwerkzeug betrachteten Normwerkzeuges, nicht unterschreitet. Die Abweichkontur kann damit von allen (Typ-gleichen) Werkzeugen, deren Werkzeug-Wirkradius gleich oder kleiner dem des Normwerkzeuges ist, ohne (durch den Werkzeug-Wirkradius) prinzipbedingte Abweichung erzeugt werden.

Vorteilhaft wird ein bestehendes Teileprogramm mittels der Steuereinrichtung derart abgeändert, dass Befehlssätze zum Erzeugen der Abweichkontur von dem neuen, abgeänderten Teileprogramm umfasst sind. Insbesondere unterscheidet sich das neue Teileprogramm von dem ursprünglichen dadurch, dass von dem neuen Teileprogramm wenigstens ein, insbesondere genau ein Satz umfasst ist, der die Abweichkontur beschreibt bzw. abbildet bzw. bei dessen Ausführung die Abweichkontur erzeugt wird.

Die Erfindung wurde für genau eine Kante bzw. genau eine Krümmung erläutert. Selbstverständlich lässt sich die Erfindung analog auf Sollkonturen übertragen, die mehrere solcher Kanten oder Krümmungen umfassen.

Weiterhin ist die Erfindung nicht auf eine spanabhebende Bearbeitung eines Werkstücks mit Fräsern oder Drehmeißeln beschränkt, bei denen der Werkzeug-Wirkradius üblicherweise als Werkzeugradius bezeichnet wird. Die Erfindung kann analog z.B. auch bei einer Bearbeitung des Werkstücks durch Schneiden oder Schleifen entlang einer Sollkontur angewendet werden.

Insbesondere beim Schneiden von Werkstücken, wie dem Laser- oder Wasserstrahlschneiden, ist nicht ein bestimmter Radius (bzw. Durchmesser) des Werkzeugs (Strahlkopfes) maßgeblich, sondern der Radius (bzw. Durchmesser) des damit erzeugten Strahles an der Werkstück-Oberfläche. Daher wird im Rahmen der Beschreibung der allgemeinere Begriff "Werkzeug-Wirkradius" (anstatt Werkzeugradius) gewählt, der auch diese Werkzeuge mit einschließt. Bei Werkzeugen zur Spanabhebenden Bearbeitung eines Werkstücks ist der "Werkzeug-Wirkradius" daher identisch mit dem bei solchen Werkzeugen normalerweise verwendeten Begriff bzw. angegebenen Werkzeugradius.

So kann auch bei einer Werkstück-Bearbeitung durch Schneiden die Bahn für einen Norm-Radius ermittelt werden und die so erzeugte neue Sollkontur auch für Schneidvorgänge mit einem von dem Norm-Radius abweichenden Strahl-Radius maßgeblich sein.

Auch hier ist die Erfindung besonders vorteilhaft bei Werkzeugmaschinen mit mehreren, insbesondere unabhängig voneinander steuerbaren, Werkzeugaufnahmen anwendbar, durch die mehrere Werkstücke gleichzeitig und insbesondere synchron (soll heißen durch gleiche Relativbewegungen zwischen Werkzeug und Werkstück) geschnitten werden können.

Das erfindungsgemäße Verfahren wird insbesondere durch ein auf der Steuereinrichtung installiertes Computerprogramm ausgeführt.

Vorteilhaft kann die erfindungsgemäße Vorgehensweise anhand eines digitalen Zwillings einer betreffenden Werkzeugmaschine simuliert werden.

Die Erfindung wird nachfolgend anhand von Ausführungsbeispielen exemplarisch näher beschrieben und erläutert. Dabei zeigen:
FIG 1 eine Mehrspindel-Werkzeugmaschine,
FIG 2 die Bearbeitung einer spitzen Ecke,
FIG 3 die Bearbeitung einer spitzen Ecke gemäß der Erfindung,
FIG 4 die Bearbeitung einer stumpfen Ecke,
FIG 5 Verfahrensschritte bei der Durchführung eines erfindungsgemäßen Verfahrens.

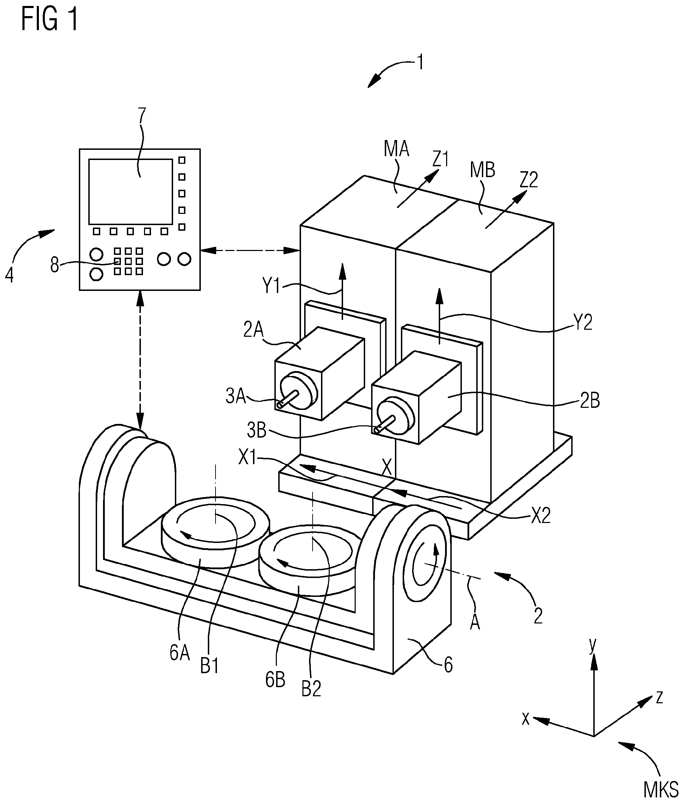

In FIG 1 ist schematisch eine beispielhafte Ausführungsform eines erfindungsgemäßen Mehrspindel-Werkzeugmaschinensystems 1 gezeigt. Dieses umfasst eine Mehrspindel-Werkzeugmaschine 2, die im Beispiel der FIG 1 insbesondere als Doppelspindel-Werkzeugmaschine 2 mit den beiden Maschineneinheiten MA und MB ausgeführt ist. Die Ausführungen lassen sich jedoch analog auch auf Werkzeugmaschinen mit mehr als zwei Werkzeugspindeln bzw. Maschineneinheiten übertragen.

Die erste Maschineneinheit MA der Mehrspindel-Werkzeugmaschine 2 weist eine erste Werkzeugspindel 2A auf, die mit einem ersten Werkzeug 3A bestückt ist. Die zweite Maschineneinheit MB der Mehrspindel-Werkzeugmaschine 2 weist eine zweite Werkzeugspindel 2B auf, die mit einem zweiten Werkzeug 3B bestückt ist. Die zweite Werkzeugspindel 2B ist dabei unabhängig von der ersten Werkzeugspindel 2A steuerbar. In einem nicht beschränkenden Beispiel sind die erste Werkzeugspindel 2A und die zweite Werkzeugspindel 2B jeweils entlang paralleler X-Achsen X1, X2, paralleler Y-Achsen Y1, Y2 und paralleler Z-Achsen Z1, Z2 als jeweilige erste Maschinenachsen X1, Y1, Z1 beziehungsweise zweite Maschinenachsen X2, Y2, Z2 bewegbar. Die X-Achsen stehen dabei senkrecht auf den Y-Achsen und die Z-Achsen stehen senkrecht auf den X-Achsen und den Y-Achsen. Es sind jedoch auch andere translatorische Maschinenachsen möglich.

Weiterhin umfasst die Mehrspindel-Werkzeugmaschine 2 gemäß dem Ausführungsbeispiel einen Werkstücktisch 6, der um eine A-Achse schwenkbar ist. Darüber hinaus umfasst der Werkstücktisch 6 die beiden Drehteller 6A und 6B, an denen jeweils ein Werkstück (in FIG 1 nicht dargestellt) um eine Achse B1 bzw. B2 drehbar befestigbar ist. Der erste Drehteller 6A ist der ersten Maschineneinheit MA und der zweite Drehteller 6B ist der zweiten Maschineneinheit MB zugeordnet. Die A-Achse wirkt auf beide Drehteller 6A und 6B gleichermaßen und ist beiden Maschineneinheiten MA und MB zugordnet.

Die Mehrspindel-Werkzeugmaschine 2 ist mit einer Steuereinrichtung 4, insbesondere einer CNC-Steuerung 4, verbunden zur (CNC-) Steuerung der Linearachsen X1, Y1 und Z1 und damit der ersten Werkzeugspindel 2A, der Linearachsen X2, Y2 und Z2 und damit der zweiten Werkzeugspindel 2B, sowie der Rundachsen A, B1 und B2. Die Programmierung der Maschinenachsen erfolgt insbesondere bezüglich eines ortsfest an einer Maschinenbasis verankerten Maschinenkoordinatensystems MKS.

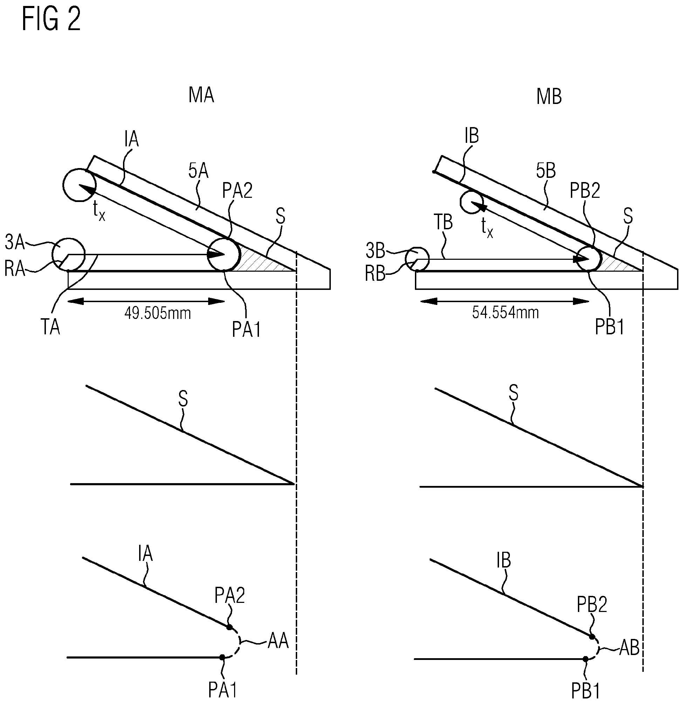

Mittels des erfindungsgemäßen Mehrspindel-Werkzeugmaschinensystems 1 kann insbesondere ein erfindungsgemäßes Verfahren zur CNC-Steuerung einer Mehrspindel-Werkzeugmaschine 2 durchgeführt werden. Zum Bearbeiten eines ersten Werkstücks 5A (siehe FIG 2) mittels des ersten Werkzeugs 3A arbeitet die CNC-Steuerung 4 ein vorgegebenes Teileprogramm in einem ersten Bearbeitungskanal (Kanal 1 bzw. Kanal KA, nicht dargestellt) ab und zum Bearbeiten eines zweiten Werkstücks 5B mittels des zweiten Werkzeugs 3B arbeitet die Steuereinrichtung 4 dasselbe Teileprogramm in einem zweiten Bearbeitungskanal (Kanal 2 bzw. Kanal KB, ebenfalls nicht dargestellt) synchronisiert mit der Abarbeitung im ersten Bearbeitungskanal ab.

Dabei steuert die CNC-Steuerung 4 zur Abarbeitung des Teileprogramms in dem ersten Bearbeitungskanal KA die ersten Maschinenachsen X1, Y1, Z1 und B1 zur Führung des ersten Werkzeugs 3A relativ zu einem ersten Werkstück (in FIG 1 nicht dargestellt) gemäß einer ersten Werkzeugbahn an und steuert zur Abarbeitung des Teileprogramms in dem zweiten Bearbeitungskanal KB die zweiten Maschinenachsen X2, Y2, Z2 und B2 zur Führung des zweiten Werkzeugs 3B relativ einem zweiten Werkstück (in FIG 1 nicht dargestellt) gemäß einer zweiten Werkzeugbahn an, wobei ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist.

In dem Ausführungsbeispiel gemäß FIG 2 sollen unter Bezugnahme auf das Werkzeugmaschinensystem 1 gemäß FIG 1 baugleiche Werkstücke 5A und 5B in den beiden Maschineneinheiten MA und MB der Doppelspindel-Werkzeugmaschine 2 gefertigt werden. Dabei wird das Werkstück 5A in der Maschineneinheit MA und das Werkstück 5B in der Maschineneinheit MB gefertigt. Die Maschineneinheit MA ist mit dem ersten Fräswerkzeug 3A bestückt, welches im Ausführungsbeispiel als neues Fräswerkzeug den Norm-Werkzeug-Wirkradius RA aufweist. Damit können prinzipiell Konturen ohne Konturfehler gefertigt werden, die keine Innen-Kanten aufweisen und bei denen Krümmungen stets einen Krümmungsradius größer dem Werkzeug-Wirkradius RA aufweisen.

Bei beiden Werkstücken 5A und 5B soll gleichermaßen eine spitze Ecke wie dargestellt gefräst werden. In den beiden Kanälen KA und KB der CNC-Steuerung 4 wird dabei das gleiche Teileprogramm (G-Code-Programm) ausgeführt zur Steuerung der beiden Maschineneinheiten MA und MB, insbesondere der beiden Spindeln 2A und 2B.

Beispielsweise könnten die Teileprogramm in den Kanälen KA (Kanal 1) und KB (Kanal 2) wie folgt lauten:

| *Werkzeug "Spindel 1" Kanal 1:* | *Werkzeug "Spindel 2" Kanal 2:* |
|---|---|
| *L=100* | *L=100* |
| *R=5* | *R=4.5* |

*Teileprogramm für beide Kanäle:*
*N1 T1 D1*
*N2 G41*
*N3 G00 X=0 Y=0 Z=0*
*N4 F10000*
*N5 G1 X100*
*N5* G1 *X49.505 ; (neuer verkürzter Satz)*
*N99* G3 *X50.014* Y9.974 *I=0 J=5 ;(neuer Satz, Kreissegment)*
*N6 G1 X0 Y20*
*N7 M30*

Durch das ersichtliche Teileprogramm soll eine spitze Ecke gefräst werden. Generell wird bzw. kann das Teileprogramm nicht wie gewünscht bearbeitet werden, da ein Werkzeug mit einer Dimension niemals solch eine Ecke erzeugen kann. Das Teileprogramm wird daher automatisch durch die CNC-Steuerung 4 in jedem Kanal dahingehend abgeändert, dass die gewünschte Kontur soweit technisch möglich mit dem betreffenden Werkzeug erzeugt wird. Die Bearbeitung mit Spindel 1 (Spindel 2A gemäß FIG 1) in Kanal 1 (Kanal KA) mit dem Werkzeug 3A mit dem Werkzeugradius R=5mm (in diesem Beispiel gleichzeitig auch das Normwerkzeug; in den Figuren nicht maßstabsgerecht dargestellt) des Satzes N5 wird bis zur Position X=49.505mm, Y=5mm verfahren, dann wird ein intern erzeugtes Kreissegment mit Radius=5mm eingefügt, danach wird die schräge Bewegung in Satz N6 bis zur Position X=-0.981mm, Y=15,097mm durchgeführt.

Die analoge Bearbeitung mit Spindel 2 (Spindel 2B) in Kanal 2 (Kanal KB) mit dem Werkzeug 3B mit dem Werkzeugradius R=4,5mm (in diesem Beispiel mit kleinerem Werkzeugradius im Vergleich zu dem Normwerkzeug; in den Figuren ebenfalls nicht maßstabsgerecht dargestellt) des Satzes N5 wird bis zur Position X=54.554, Y=5mm verfahren, dann wird ein intern erzeugtes Kreissegment mit Radius=4,5mm eingefügt, danach geht die schräge Bewegung in Satz N6 bis zu Position X=-0,883, Y=15,587. Die zweite Spindel (mit dem kleineren Werkzeugradius) muss in diesem Fall einen um 5,049mm längeren Weg in X-Richtung verfahren, um das Teileprogramm abarbeiten zu können.

In der Praxis ist solch eine Vorgehensweise bezüglich der Teileprogrammerstellung durch die bei CNC-Steuerungen bekannten Funktionen "Werkzeugradiuskorrektur" und "Flaschenhalserkennung" üblich.

In beiden Kanälen wird das identische Teileprogramm verwendet. Die Kontur wird mit einer bestimmten Werkzeugmittelpunktsbahn (nachfolgend auch kurz als "Werkzeugbahn" oder im konkreten Ausführungsbeispiel als "Fräsermittelpunktsbahn" bezeichnet) TA bzw. TB erzeugt, welche sich aus der vorgegebenen Werkstück-Kontur (Sollkontur S) und dem Radius des jeweiligen Fräsers ergibt. Die CNC-Steuerung 4 umfasst hierfür die bei CNC-Steuerungen allgemein bekannte Funktion "Werkzeugradiuskorrektur".

In FIG 2 sind zur besseren Veranschaulichung die Sollkontur S und die durch das entsprechend modifizierte Teileprogramm erzeugbare Istkontur IA separat von dem Werkstück 5A dargestellt. Die beiden Konturen S und IA unterscheiden sich zwischen den beiden Punkten PA1 und PA2 durch die von dem Werkzeug 3A in diesem Bereich erzeugte Abweichkontur AA. Dabei geht das Kreissegment mit dem Radius RA in den Punkten PA1 und PA2 nahtlos und stetig in die beiden geraden Teilstücke der Sollkontur S über.

In FIG 2 ist auf der rechten Seite die gleiche Situation für die Maschineneinheit MB bzw. den zweiten Kanal KB bzw. Kanal 2 (nicht dargestellt) der CNC-Steuerung 4 veranschaulicht. Auch bei dem Werkstück 5B soll die Sollkontur S hergestellt werden. Im Unterschied zu der Bearbeitung des Werkstücks 5A in der Maschineneinheit 5A erfolgt hier die Bearbeitung des Werkstücks 5B in der Maschineneinheit MB mit einem kleineren Werkzeug, soll heißen einem Fräser 3B mit gegenüber dem Fräser 3A deutlich kleinerem Werkzeugradius RB. Trotz des kleineren Werkzeugradius RB kann auch hier die spitze Ecke (Sollkontur S) nicht exakt gefertigt werden. Stattdessen wird auch hier die Kontur mittels der CNC-Steuerung 4 automatisch angepasst und die ersichtliche Istkontur IB mittels der dargestellten Werkzeugmittelpunktsbahn TB erzeugt. Dargestellt sind auch hier die beiden Konturen S (Sollkontur) und IB (Istkontur), die sich zwischen den beiden Punkten PB1 und PB2 unterscheiden (siehe Abweichkontur AB), bedingt durch das Werkzeug 3B mit dem Werkzeugradius RB. Auch hier geht das Kreissegment mit dem Radius RB in den Punkten PB1 und PB2 nahtlos und stetig in die beiden geraden Teilstücke der Sollkontur S über.

Wie aus FIG 2 weiterhin ersichtlich ist, muss das Werkzeug 3B einen längeren Weg zurücklegen als das Werkzeug 3A, so dass es zum Zeitpunkt tₓ dem Werkzeug 3A nacheilt.

Wenn die Fahrt durch eine spitze Ecke (FIG 2) mit unterschiedlichen Werkzeugen, insbesondere unterschiedlichen Werkzeugradiuskorrekturen bzw. Werkzeugradiusverschleißkorrekturen ausgeführt wird, die Steuerung also die programmierte Endkontur (in diesem Fall X=100mm) nicht erreichen kann, wird am korrigierten Endpunkt des Satzes N5 ein Versatz von über 5mm in X-Richtung zwischen den beiden Bearbeitungskanälen die Folge sein. Am Ende der programmierten Kontur N6 (zum Zeitpunkt t = tₓ) wird der Versatz über 10mm groß sein bezogen auf den Bahnparameter "Konturlänge", da der Kanal mit dem kleineren Werkzeugdurchmesser 5mm weiter in die Ecke fahren muss und 5mm länger aus der Ecke wieder rausfahren muss (siehe FIG 2)

Generell tritt folgendes Problem auf: wenn die Steuerung für Werkzeugmaschinen zum Abarbeiten der programmierten Kontur mit Werkzeugradiuskorrektur Offsetbahnen berechnen muss und diese dann als Fräsermittelpunktsbahnen für die Bahnberechnung zu Grunde legt, wird es in unterschiedlichen Kanälen mit unterschiedlichem Werkzeugradius immer unterschiedliche Fräsermittelpunktsbahnen und somit einen mehr oder weniger großen Versatz zwischen den Bearbeitungskanälen geben. Obwohl die Werkstückgeometrie bzw. das Teileprogramm identisch programmiert sind, werden sich die Fräsermittelpunktsbahnen immer um die Größe des Differenzwerkzeugradius unterschieden. Die Unterschiede in den Fräsermittelpunktsbahnen werden umso deutlicher, umso stärker die Konturänderungen sind (siehe spitze Ecke im Beispiel gemäß FIG 2).

Die Doppelspindler-Maschinen werden eingesetzt, wenn eine sehr hohe Produktivität auf kleinstem Raum gefordert ist. Zusätzlich wird für die hohe Produktivität eine hohe Dynamik der Achsen gefordert bzw. die Achsen werden an ihrer Dynamikgrenze betrieben, sodass, wie bereits beschrieben, bei Mehrspindlern ein asynchroner Betrieb entsteht und eine Kollisionsgefahr besteht. Mit der Anforderung, dass die Bearbeitungs- bzw. Maschineneinheiten sehr nahe aneinander Fahren und unter Umständen dieselbe Führungsschiene (eine Achse gemeinsam) nutzen, besteht bereits bei geringer zeitlicher und örtlicher Asynchronität ein erhebliche Kollisionsgefahr.

Erfindungsgemäß wird eine neue Steuerungsfunktion geschaffen, die ein Teileprogramm in dem Sinne vorverarbeitet, dass die bestehende Konturbeschreibung automatisch so erweitert wird, also zusätzliche Geometriesätze und ggf. weitere "Informationen" eingefügt werden, so dass eine Funktion wie z.B. Werkzeugradiuskorrektur (Offsetbahnen erzeugen) keine Konturteile (z.B. bei Flaschenhalserkennung) oder Konturstücke (Teile einer Geraden) entfernen oder kürzen muss, um diese mit beliebigen Werkzeugkorrekturen abarbeiten zu können.

Das Teileprogramm gemäß obigem Beispiel würde folgendermaßen automatisch um den Satz
N99 G3 X50.014 Y9.974 I=0 J=5
erweitert (ggf. nur intern, für den Maschinenbediener nicht sichtbar) werden, Satz N5 muss automatisch (ggf. nur intern, für den Maschinenbediener nicht sichtbar) gekürzt werden. Das Beispiel-Teileprogramm würde sich dann wie folgt gestalten:

| *Werkzeug "Spindel 1" Kanal 1:* | *Werkzeug "Spindel 2" Kanal 2:* |
|---|---|
| *L=100* | *L=100* |
| *R=5* | *R=4.5* |

*Teileprogramm für beide Kanäle:*
*N1 T1 D1*
*N2 G41*
*N3 G00 X=0 Y=0 Z=0*
*N4 F10000*
*N5 G1 X100*
*N5* G1 *X49.505 ; (neuer verkürzter Satz)*
*N99* G3 *X50.014* Y9.974 *I=0 J=5 ;(neuer Satz, Kreissegment)*
*N6 G1 X0 Y20*
*N7 M30*

Wenn das Teileprogramm nun im Vergleich zu dem weiter oben ersichtlichen, ursprünglichen Teileprogramm abgearbeitet wird, ergibt sich am Ende von Satz N5 nur eine Abweichung zwischen erstem und zweitem Kanal von 0,5mm, der Differenz des Werkzeugradius.

Das durch eine Vorverarbeitung erzeugte Teileprogramm mit all seinen zusätzlich eingefügten Geometriesätzen und weiteren Informationen wird in beiden Kanälen angewählt und gestartet und mit unterschiedlichen Werkzeugkorrekturen (insbesondere Werkzeugradiuskorrekturen) abgearbeitet. Bei der Abarbeitung werden Unterschiede nur noch in der Größenordnung der Werkzeugdifferenzen auftreten.

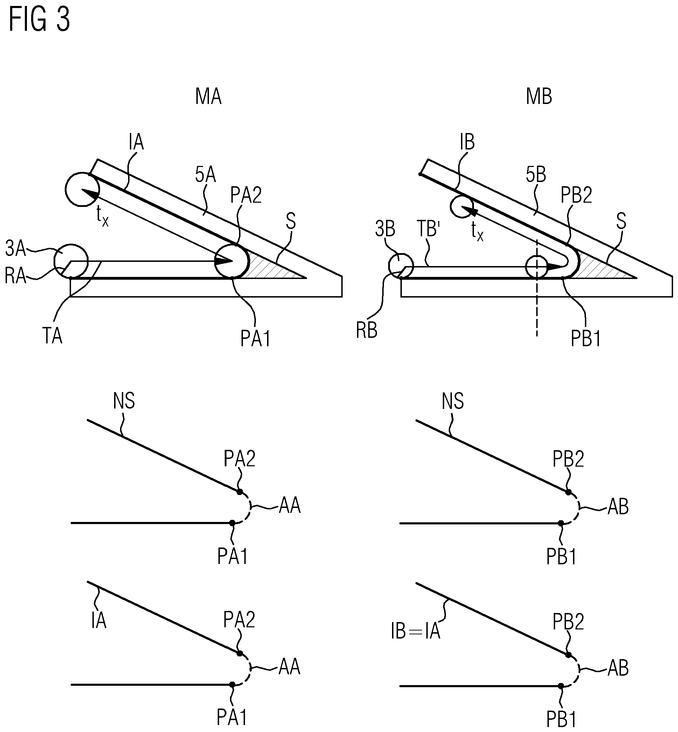

Die genannten Auswirkungen der Erfindung werden nachfolgend anhand von FIG 3 weiter veranschaulicht. Ausgehend von dem Werkzeug 3A der Maschineneinheit MA wird eine neue Sollkontur NS ermittelt, die der Istkontur IA aus FIG 2 entspricht. Das Werkzeug 3A wird daher als für die Erzeugung der neuen Sollkontur NS maßgebliches Norm-Werkzeug mit dem entsprechenden Norm-Werkzeugradius RA herangezogen. Die neue Sollkontur NS gestaltet sich dabei derart, dass diese mit dem Werkzeug 3A (Normwerkzeug) ohne prinzipbedingte Abweichungen erzeugt werden kann. Insbesondere werden im entsprechenden, die neue Sollkontur NS erzeugenden Teileprogramm gegenüber dem bisherigen Teileprogramm die beiden geraden Teilstücke gekürzt (das erste gerade Teilstück endet im Punkt PA1, das zweite gerade Teilstück beginnt im Punkt PA2) und zwischen den beiden Punkten PA1 und PA2 ein Kreissegment mit dem Radius RA, entsprechend der Abweichkontur AA, eingefügt.

Anders als im Beispiel gemäß FIG 2 wird nun jedoch auch für das ("kleinere") Werkzeug 3B der Maschineneinheit MB eine neue Sollkontur NS für das maßgebliche Normwerkzeug, also im Ausführungsbeispiel das Werkzeug 3A erzeugt, insbesondere mittels einer neuen Steuerungsfunktion "Geometrie-Vorverarbeitung für Offsetbahnen" der CNC-Steuerung 4. Analog zu der Vorgehensweise aus FIG 2 erzeugt die Steuereinrichtung auf Basis der neuen Sollkontur NS und unter Berücksichtigung des Werkzeugradius RB zunächst mittels der Funktion "Werkzeugradiuskorrektur" die Werkzeugmittelpunktsbahn (kurz Werkzeugbahn) für das Werkzeug 3B. Diese stimmt nun - wie ersichtlich - nicht mehr mit der ursprünglichen zweiten Werkzeugbahn TB aus FIG 2 überein und wird daher als neue zweite Werkzeugbahn (Werkzeugmittelpunktsbahn) TB` bezeichnet. Die solchermaßen erstellte neue zweite Werkzeugbahn wird nun dem Werkzeug 3B der Maschineneinheit MB zur Bearbeitung des zweiten Werkstücks 5B vorgegeben. Beide Maschineneinheiten erzeugen damit identische Istkonturen IA = IB = NS.

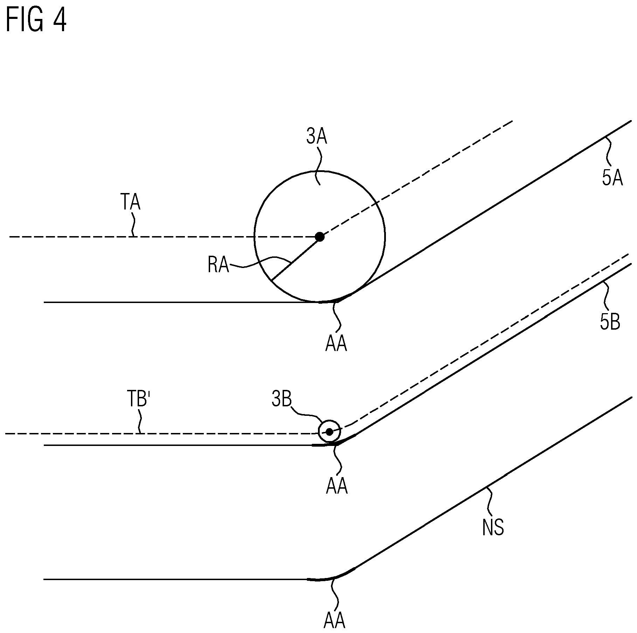

FIG 4 veranschaulicht die Situation bei einem Soll-Konturverlauf mit einem stumpfen Winkel der Werkstücke 5A und 5B. Auch hier soll das Werkzeug 3A als Normwerkzeug gelten und den tatsächlich realisierbaren Konturverlauf bestimmen. Wird dem Werkzeug 3A durch ein entsprechendes Teileprogramm in Verbindung mit einer mittels der CNC-Steuerung ausgeführten Werkzeugradiuskorrektur die Werkzeugmittelpunktsbahn TA vorgegeben, so kommt es im Bereich der Kante prinzipbedingt durch den Werkzeugradius RA zu der Konturabweichung (Abweichkontur) AA. Diese Abweichkontur wird nun als Teil der neuen Sollkontur NS in diese mit einbezogen und die beiden Geradenstücke entsprechend gekürzt. In das ursprüngliche Teileprogramm wird entsprechend wenigstens ein neuer Satz eingefügt, der diese Konturabweichung widerspiegelt bzw. erzeugt.

Das solchermaßen erstellte neue Teileprogramm ist auch maßgeblich für das Werkzeug 3B der Maschineneinheit MB, indem die Maschineneinheit MB das in der Maschineneinheit erzeugte neue Teileprogramm übernimmt oder in dem Kanal KB auf Basis der Norm-Werkzeug-Daten aus Kanal KA das gleiche Teileprogramm erzeugt wie Kanal KA. In Verbindung mit der Werkzeugradiuskorrektur ermittelt die CNC-Steuerung die Werkzeugmittelpunktsbahn (Werkzeugbahn) TB` für das Werkzeug 3B, womit bei dem Werkstück 5B die gleiche Istkontur erzeugt wird wie bei dem Werkstück 5A. In FIG 4 ist diese separat als neue Sollkontur NA veranschaulicht, die sich aus zwei geraden Teilstücken und der Abweichkontur AA zusammensetzt.

Die Vorverarbeitung bzw. Aufbereitung der Geometrie und das Starten dieses vorverarbeiteten Teileprogramm kann dazu beitragen, ohne einer Zwangssynchronisierung über Kanäle hinweg echte Doppelspindler-Maschinen weitgehend synchron und damit ohne Kollisionen zu betreiben.

Die Erfindung sieht eine neue Steuerungsfunktion vor, die bei Doppel- oder Mehrspindler und einem beliebigen NC-Programm (das in mehreren Kanälen gleichzeitig angewendet wird) anwendbar ist. Die Funktion könnte mittels zweier Eingabeparameter (max. statischer und dynamischer Abstand) bei einem ähnlichen Werkzeug, d.h. einem identischen Werkzeug bis auf den Werkzeugverschleiß ein Teileprogramm über zwei oder mehrere Kanäle einfach synchronisieren. Damit lassen sich hochproduktive Werkzeugmaschinen noch weiter verbessern und optimieren. Außerdem erlaubt die Funktion zwei nahezu eigenständige Werkzeugmaschinen bei gleichem Teileprogramm und somit identischem Werkstück "sehr nah" zusammen zu bauen, so dass die Aufstellfläche (Platz der Maschine in der Maschinenhalle) so klein wie möglich bleibt, was immer mehr für ein Kaufkriterium vor allem im europäischen Raum wird. Zusätzlich ist es möglich mit solchen Mehrspindlerwerkzeugmaschinen Energie zu sparen, denn die Kühlschmiermittel-, die Hydraulikpumpe, ebenso wie das Kühlaggregat muss für zwei Bearbeitungen nur einmal vorhanden sein. Die neue Steuerungsfunktion z.B. "Geometrie-Vorverarbeiter für Offsetbahnen" könnte folgendermaßen realisiert sein: Ein Geometrie-Vorverarbeiter für Offsetbahnen, z. B. für die Werkzeugkorrektur (z.B. Länge und Durchmesser eines Fräsers) eines Normwerkzeugs, berechnet vor der eigentlichen Abarbeitung des Teileprogramm ein neues Teileprogramm, bei dem mit den Dimensionen des Normwerkzeugs die Kontur immer vollständig erzeugt werden kann. Dieses neue Teileprogramm wird dann für alle (Bearbeitungs-) Kanäle verwendet bzw. in allen Kanälen gleichermaßen erzeugt. Durch diese Vorverarbeitung (also mit der Vorberechnung der Werkzeugkorrektur bezüglich des Normwerkzeugs) müsste bei der Abarbeitung des neuen Teileprogramms im jeweiligen Kanal nur noch die Verschleißkorrektur (im laufenden Betrieb) individuell berücksichtigt werden. Da der Verschleiß von Werkzeugen im laufenden Betrieb eher klein ist, sind die daraus resultierenden Unterschiede in den Kanälen entweder vernachlässigbar bzw. so klein, so dass diese durch temporäre Synchronisationspunkte über explizite WAIT-Marken oder intern erzeugte WAIT-Marken synchronisiert werden können.

Die Einführung solch einer Steuerungsfunktion würde die Bearbeitungsgeschwindigkeit und die Qualität an allen Bauteilen, die mit diesen Technologien hergestellt werden, erhöhen. Diese technische Neuerung kann die Wirtschaftlichkeit von Mehrspindlermaschinen, insbesondere Doppelspindlermaschinen, deutlich steigern.

Durch eine Vorverarbeitung lassen sich geometrie-spezifische Dinge, z.B. Werkzeugkorrekturen in spitzen Ecken o.a., für das abzuarbeitende Teileprogramm oder Werkstück durchführen. Da diese im abzuarbeitenden Teileprogramm oder Werkstück selbst umgesetzt werden, kommen diese dann allen ausführenden Kanälen auf gleicher Weise zugute, so dass die ausführenden Kanäle nur noch um kleine Versätze (z.B. Verschleiß, etc.) unterschiedliche Bahnen realisieren und abfahren müssen.

Die neue Steuerungsfunktion z.B. "Geometrie-Vorverarbeiter für Offsetbahnen" könnte auch für andere Aufgabenstellungen die Lösung sein. Wenn z.B. ein Maschinenbediener die Anforderung hat, identische Werkstücke mit unterschiedlich großem Werkzeugradius herzustellen, könnte er mit der Funktion "Geometrie-Vorverarbeiter für Offsetbahnen" für sein größtes vorhandenes Werkzeug die Vorverarbeitung starten, das Ergebnis derer als neues (Werkstück-) Teileprogramm ablegen und mit dessen Abarbeitung mit "kleineren Werkzeugen" identische Werkstücke herstellen. Allgemein ist die Erfindung nicht auf Mehrspindler-Maschinen beschränkt, sondern kann analog auch bei Maschinen mit nur einer Spindel angewendet werden, z.B. um weitgehend identische Werkstücke auf einer Maschine sequentiell oder auf unterschiedlichen Maschinen herzustellen.

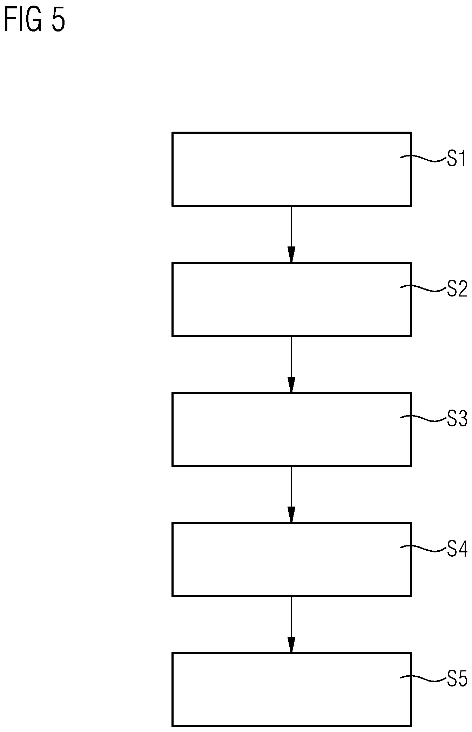

Wesentliche Verfahrensschritte bei der Durchführung eines erfindungsgemäßen Verfahrens sind in FIG 5 veranschaulicht.

In einem ersten Verfahrensschritt S1 wird einer Steuereinrichtung, insbesondere einer numerischen bzw. CNC-Steuerung, einer Werkzeugmaschine zur Bearbeitung wenigstens eines ersten Werkstücks mittels eines ersten Werkzeugs mit einem ersten Werkzeug-Wirkradius und eines zweiten Werkstücks mittels eines zweiten Werkzeugs mit einem zweiten Werkzeug-Wirkradius eine Sollkontur für die Werkstücke vorgegeben.

Die Steuereinrichtung bestimmt aus den die Sollkontur betreffenden Daten in einem zweiten Verfahrensschritt S2 eine erste Werkzeugbahn für ein erstes Werkzeug mit einem ersten Werkzeug-Wirkradius zum Erzeugen einer ersten Sollkontur, wobei aufgrund einer Krümmung oder einer Kante in der ersten Sollkontur die erste Sollkontur mit dem ersten Werkzeug aufgrund des ersten Werkzeug-Wirkradius nicht fehlerfrei erzeugbar ist, sondern nur in Form einer ersten Istkontur, die im Bereich der Krümmung oder der Kante eine erste Abweichkontur gegenüber der ersten Sollkontur umfasst.

In einem Verfahrensschritt S3 erzeugt die Steuereinrichtung eine neue Sollkontur, die die Abweichkontur umfasst.

In einem vierten Verfahrensschritt S4 ermittelt die Steuereinrichtung eine neue zweite Werkzeugbahn für das zweite Werkzeug in Abhängigkeit des zweiten Werkzeug-Wirkradius zum Erzeugen der neuen Sollkontur (NS).

In einem fünften Verfahrensschritt S5 wird das zweite Werkstück gemäß der neuen zweiten Werkzeugbahn bearbeitet.

## Patentansprüche

1. Verfahren zur Bearbeitung wenigstens eines ersten Werkstücks (5A) mittels eines ersten Werkzeugs (3A) mit einem ersten Werkzeug-Wirkradius (RA) und eines zweiten Werkstücks (5B) mittels eines zweiten Werkzeugs (3B) mit einem zweiten Werkzeug-Wirkradius (RB), wobei eine Sollkontur (S) für die Werkstücke (5A, 5B) vorgegeben ist,
wobei eine erste Werkzeugbahn (TA) für das erste Werkzeug (3A) in Abhängigkeit des ersten Werkzeug-Wirkradius (RA) ermittelt wird,
wobei aufgrund einer Krümmung oder einer Kante in der Sollkontur (S) die Sollkontur (S) mit dem ersten Werkzeug (3A) aufgrund des ersten Werkzeug-Wirkradius (RA) nicht fehlerfrei erzeugbar ist, sondern nur in Form einer ersten Istkontur (IA), die im Bereich der Krümmung oder der Kante eine erste Abweichkontur (AA) gegenüber der Sollkontur (S) umfasst,
wobei eine neue Sollkontur (NS) erzeugt wird, die die Abweichkontur (AA) umfasst,
wobei eine neue zweite Werkzeugbahn (TB`) für das zweite Werkzeug (3B) in Abhängigkeit des zweiten Werkzeug-Wirkradius (RB) zum Erzeugen der neuen Sollkontur (NS) ermittelt wird,
wobei das zweite Werkstück (3B) gemäß der neuen zweiten Werkzeugbahn (TB`) bearbeitet wird.

2. Verfahren nach Anspruch 1, wobei es sich bei dem ersten Werkzeug (3A) um ein Normwerkzeug mit einem Norm-Werkzeug-Wirkradius handelt.

3. Verfahren nach Anspruch 1 oder 2, wobei es sich bei dem ersten Werkzeug (3A) und dem zweiten Werkzeug (3B) jeweils um ein Fräswerkzeug handelt.

4. Verfahren nach einem der vorherigen Ansprüche, wobei der Werkzeug-Wirkradius (RB) des zweiten Werkzeugs (3B) kleiner ist als der Werkzeug-Wirkradius (RA) des ersten Werkzeugs (3A).

5. Verfahren nach einem der vorherigen Ansprüche, wobei mittels des zweiten Werkzeuges (3B) ein zweites, von dem ersten Werkstück (5A) verschiedenes Werkstück (5B) bearbeitet wird.

6. Verfahren nach einem der vorherigen Ansprüche, wobei die Abweichkontur (AA) anhand des ersten Werkzeug-Wirkradius (RA) des ersten Werkzeuges (3A) bestimmt wird.

7. Verfahren nach einem der vorherigen Ansprüche, wobei die Sollkontur (S) in Form von Sätzen eines Teileprogramms abgebildet wird und die neue Sollkontur (NS) in Form von neuen Sätzen eines neuen Teileprogramms abgebildet wird und wobei sich das Teileprogramm und das neue Teileprogramm darin unterscheiden, dass das neue Teileprogramm wenigstens einen neuen Satz umfasst, der die Abweichkontur (AA) abbildet.

8. Steuereinrichtung (4) für eine Werkzeugmaschine (2) zur Bearbeitung wenigstens eines ersten Werkstücks (5A) mittels eines ersten Werkzeugs (3A) mit einem ersten Werkzeug-Wirkradius (RA) und eines zweiten Werkstücks (5B) mittels eines zweiten Werkzeugs (3B) mit einem zweiten Werkzeug-Wirkradius (RB), insbesondere zur Durchführung eines Verfahrens nach einem der Ansprüche 1 bis 7,
wobei eine Sollkontur (S) für die Werkstücke (5A, 5B) vorgebbar ist,
wobei mittels der Steuereinrichtung (4) und einer davon umfassten Korrektureinrichtung eine erste Werkzeugbahn (TA) für das erste Werkzeug (3A) in Abhängigkeit des ersten Werkzeug-Wirkradius (3A) ermittelbar ist,
wobei aufgrund einer Krümmung oder einer Kante in der ersten Sollkontur (S) die erste Sollkontur (S) mit dem ersten Werkzeug (3A) aufgrund des ersten Werkzeug-Wirkradius (RA) nicht fehlerfrei erzeugbar ist, sondern nur in Form einer ersten Istkontur (IA), die im Bereich der Krümmung oder der Kante eine erste Abweichkontur (AA) gegenüber der ersten Sollkontur (S) umfasst,
wobei eine neue Sollkontur (NS) erzeugbar ist, die die Abweichkontur (AA) umfasst,
wobei eine neue zweite Werkzeugbahn (TB`) für das zweites Werkzeug (3B) in Abhängigkeit des zweiten Werkzeug-Wirkradius (RB) zum Erzeugen der neuen Sollkontur (NS) ermittelbar ist,
wobei das zweite Werkstück (5B) gemäß der neuen zweiten Werkzeugbahn (TB`) bearbeitbar ist.

9. Steuereinrichtung (4) nach Anspruch 8, wobei mittels des zweiten Werkzeuges (3B) ein zweites, von dem ersten Werkstück (5A) verschiedenes Werkstück (5B) bearbeitbar ist.

10. Steuereinrichtung (4) nach Anspruch 8 oder 9, wobei, die Abweichkontur (AA) anhand des ersten Werkzeug-Wirkradius (RA) des ersten Werkzeuges (3A) bestimmbar ist.

11. Steuereinrichtung (4) nach einem der Ansprüche 8 bis 10, wobei die Sollkontur (S) in Form von Sätzen eines Teileprogramms abbildbar ist und die neue Sollkontur (NS) in Form von neuen Sätzen eines neuen Teileprogramms abbildbar ist und wobei sich das Teileprogramm und das neue Teileprogramm darin unterscheiden, dass das neue Teileprogramm wenigstens einen neuen Satz umfasst, der die Abweichkontur (AA) abbildet.

12. Steuereinrichtung (4) nach einem der Ansprüche 8 bis 11, ausgebildet als CNC-Steuerung (4).

13. Werkzeugmaschinensystem (1), umfassend eine Werkzeugmaschine (2) und eine Steuereinrichtung (4) nach einem der Ansprüche 8 bis 12 zur Durchführung eines Verfahrens nach einem der Ansprüche 1 bis 7.

14. Werkzeugmaschinensystem (1) nach Anspruch 13, umfassend eine Mehrspindel-Werkzeugmaschine (2).

15. Digitaler Zwilling eines Werkzeugmaschinensystems (1) nach Anspruch 13 oder 14 zur Simulation eines Verfahrens nach einem der Ansprüche 1 bis 7.
